# EUROPEAN PATENT SPECIFICATION

(11) **EP 1 927 518 B1**
(45) Date of publication and mention of the grant of the patent: **18.03.2015**
(21) Application number: 07121407.6
(22) Date of filing: 23.11.2007
(51) Int. Cl.: B60R 13/07, B60J 7/00, B60J 7/02, B62D 65/06, B60N 3/02, B60R 21/213, B60R 21/232, B60R 21/16

(54) **Vehicle structures or components defining a deployment control surface for an airbag**
Fahrzeugstrukturen oder -komponenten zur Definition einer Einsatzsteuerungsoberfläche für einen Airbag
Structures ou composants de véhicule définissant une surface de contrôle du déploiement pour un coussin d'air

(30) Priority: 29.11.2006 GB 0623809; 29.11.2006 GB 0623793
(43) Date of publication of application: 04.06.2008
(73) Proprietor: Nissan Motor Manufacturing (UK) Ltd., Cranfield Bedfordshire MK43 0DB (GB)
(72) Inventor: Johnson, Murray Nissan Motor Mfg. (UK) Ltd Nissan Techn.Ctr.Europe, Cranfield, Bedfordshire MK43 0DB (GB)
(74) Representative: Hufton, Victoria Alice

(56) References cited:
- EP-A- 1 362 750
- EP-A- 1 674 349
- WO-A-03/089273
- DE-A1- 10 216 766
- DE-A1- 19 841 340
- JP-A- 2000 198 407
- US-A1- 2001 000 290
- US-A1- 2005 173 902
- US-A1- 2006 001 245
- ANONYMOUS: "Inflatable curtain rigid ramp" RESEARCH DISCLOSURE, MASON PUBLICATIONS, HAMPSHIRE, GB, vol. 478, no. 56, 1 February 2004 (2004-02-01), XP007133410 ISSN: 0374-4353

## Description

This invention relates to vehicle airbag systems and in particular to a vehicle structural component defining a deployment control surface for an airbag, especially a curtain airbag.

Increasingly stringent safety standards have resulted in the widespread adoption of curtain airbag systems in vehicles such as cars. Curtain airbag systems typically comprise an elongate airbag stowed behind the headlining or other interior trim panels to each side of a vehicle roof. The airbag is typically stowed under, within or inboard of longitudinal roof members (otherwise known as 'cant-rails') above the vehicle side windows.

The purpose of a curtain airbag is to improve protection against side impacts and roll-over impacts by inflating between the side windows of a vehicle and its occupants. This helps to protect the occupants against impact with the vehicle interior and intruding vehicle structures during a collision. It also helps to keep the occupants contained within the vehicle.

In order to work, a curtain airbag must inflate outboard of the occupants and inboard of the side windows and supporting structure. This requires careful control of deployment during the rapid inflation of the airbag, to ensure that the inflated airbag reaches its intended location quickly and reliably. In doing so, the airbag must avoid undesirable interaction with nearby vehicle components such as assist grips, otherwise known as grab handles, which are typically attached to the cant-rails. Furthermore, the airbag must also avoid damage from nearby vehicle components such as pieces of vehicle trim, seat belt mountings and sunroof mountings. Also, where possible, interior trim panels and other components must not become detached and interact undesirably with the curtain airbag or the occupants during airbag deployment. Trim panels that conceal an airbag are usually designed to deflect aside as the airbag inflates but to remain anchored to the vehicle structure throughout.

Control of curtain airbag deployment may be effected to an extent by deployment control surfaces which are attached to or formed in the vehicle structure, typically along the cant-rails above the vehicle side windows. Deployment control surfaces typically take the form of reaction surfaces and/or deflection surfaces. Deflection surfaces are also known as ramps. Reaction surfaces are inclined to impart a desired generally downward movement to the curtain airbag in reaction to the inflation of the airbag, whereas deflection surfaces are inclined to deflect the airbag during deployment, so that it is deployed clear of, and hence is prevented from 'hanging' on items of vehicle trim. Thereafter the airbag may be restrained by tethers or other attachments to the vehicle structure. Curtain airbags are typically stowed below reaction surfaces, and above deflection surfaces.

It is desirable to minimise the number of operations and components required to manufacture a vehicle. However, the provision of airbag deployment control surfaces may require additional components to be attached to the vehicle or curtain airbag assembly. For example, airbag mounting brackets may be adapted to provide deployment control surfaces.

As another issue, many modem vehicles include a sunroof having a retractable sunblind that, when retracted, is stored in a region generally above and behind the heads of passengers travelling in the back seats of the vehicle. The sunblind may be of a roller-blind or lamella type. The sunroof may itself be retractable. There is therefore a need for a sunroof mechanism in this region for driving and storing the sunblind and/or sunroof. Such a mechanism, which will be referred to herein as sunroof mechanism for brevity, typically forms a cross member on a sunroof mechanism mounting bracket attached, via suitable bracketry, to a cant-rail. Stowed curtain airbags are usually located close to the sunroof mechanism, and it is important that the mechanism does not interfere with the deployment of the airbag and that the airbag fits around the mechanism and the supporting bracket.

Document US 2006/0001245 shows such a component.

It is against this background that the invention has been devised.

The invention is defined by the features of the characterizing portion of claim 1

A vehicle structural component for a vehicle comprising a curtain airbag is provided. Said vehicle structural component comprises at least one mounting for a second discrete vehicle component. Said vehicle component mounting is vertically separated from said curtain airbag when said vehicle structural component and said curtain airbag are mounted on said vehicle. Said structural component also comprises a deployment control surface angled and positioned to deflect the deployment of the curtain airbag away from said vehicle component mounting when said curtain airbag is deployed.

The deployment control surface may be a reaction surface for directing a curtain airbag in a generally downwards direction. Alternatively, where the desired deployment trajectory is interrupted by a static object or feature of the vehicle such a piece of trim, a deployment control surface may be a deflection surface for deflecting the curtain airbag around that feature during deployment. In certain embodiments of the invention, the mounting may define both a reaction surface and a deflection surface.

The invention employs an assist grip mounting to perform the additional role of defining a deployment control surface for controlling the direction of deployment of a curtain airbag. In doing so, the invention minimises the number of operations and components necessary to make a vehicle. Additionally, the invention ensures that the assist grip itself will not adversely affect deployment of the airbag or become detached from the vehicle structure as the airbag inflates.

The deployment control surface may be adjacent to or in the vicinity of the mounting. The deployment control surface may be a reaction surface that is suitably below the mounting when the structure or component is oriented in use. The deployment control surface may instead be a deflection surface below the curtain airbag, in use.

The mounting may be defined by a projecting part of the component or structure, and may comprise one or more holes in the projecting part. The deployment control surface may extend or depend from the projecting part, and the component or structure may be hollow behind the projecting part. Being hollow provides the advantage that the component may deflect towards the roof structure if struck by an occupant during an impact, thus absorbing some of the impact energy. Alternatively, or additionally, to absorb impact, the component may be formed from an energy-absorbing material and/or an assist grip, which is ultimately attached to the mounting, may be formed from a frangible material. The direction of load exerted on the mounting by a contact with a vehicle occupant is generally perpendicular to the loads exerted on the mounting by the deploying airbag. The difference in loading direction allows the stiffness of the mounting design to be optimised for both energy absorption and airbag deployment deflection. Moreover, the device may be held in place by clips, adhesive, welding or other suitable securing means instead of being bolted to the vehicle body.

The invention employs a sunroof mechanism mounting to perform the additional role of defining a deployment control surface for a curtain airbag. In doing so, the invention minimises the number of operations and components necessary to make a vehicle.

Additionally, the invention ensures that the sunroof mechanism mounting will not hinder correct deployment of the airbag or be caused to detach as the airbag inflates.

The mounting may be defined by a projecting part of the component or structure, and the projecting part may comprise a platform for supporting a sunroof mechanism. The reaction surface may be defined at least partially by a surface of the platform.

The mounting may comprise an additional deployment control surface. For example, in addition to a reaction surface, the mounting may comprise a deflection surface for deflecting the curtain airbag, upon deployment, past various protruding components in the vehicle, such as seat belt mounts, or portions of vehicle trim. This prevents the airbag being damaged by such components or causing such components to detach and cause injury. Preferably such a deflection surface is a ramp. The ramp may extend in an inboard direction. Where the invention is embodied in a component for attaching to a vehicle structure, the ramp may be a lowermost portion of the component. When the structure or component is installed in a vehicle, the ramp is preferably located directly above the protruding component.

The mounting may comprise first and second additional deployment control surfaces in the form of ramps which are respectively located directly above first and second protruding components when the structure or component is installed in a vehicle. The first ramp extends by a first distance and is oriented to direct a curtain airbag clear of the first projecting component when the airbag is deployed. The second ramp extends by a second distance and is oriented to direct a curtain airbag clear of the second protruding component when the airbag is deployed. The first and second protruding components may, for example, be portions of vehicle trim which protrude to different extents. The first and second distances may be different to allow the airbag to be deployed clear of the two portions of differently projecting trim. Other embodiments of the invention may comprise any number of additional deployment control surfaces such as ramps so that a curtain airbag can be deployed clear of any number of differently projecting portions of trim.

Where the invention is embodied in a vehicle structure, the mounting and its reaction surface may be formed as a feature in the inner panel of a cant-rail. Conversely, where the invention is embodied in a component, that component may be a bracket further including means for attachment to a vehicle structure. The bracket may be formed by a metallic pressing, casting or extrusion or, alternatively, from a suitable polymeric material. The bracket may be a single moulding. Moreover, where the device is a component, it may be held in place by clips, adhesive, welding or other suitable securing means instead of being bolted to the vehicle body.

The inventive concept encompasses a cant-rail assembly having the structural component of the invention as defined above mounted thereto or integral therewith. The inventive concept also encompasses a vehicle having the structure or component of the invention as defined above.

In order that the invention may be more readily understood, reference will now be made by way of example to the accompanying drawings in which:
Figure 1 is a perspective view of a bracket according to the invention, comprising a mounting for an assist grip, the mounting having a reaction surface for a curtain airbag;
Figure 2 is an internal side view of a vehicle body structure with two brackets and a curtain airbag attached;
Figure 3 is a perspective view of one of the brackets of Figure 2, showing a curtain airbag located below the mounting and the reaction surface of the bracket;
Figure 4 is a schematic section through a cant-rail, bracket and curtain airbag, taken along the line A-A in Figure 3;
Figure 5 is a perspective view of a bracket according to the invention, comprising a mounting for a sunroof or sunblind, the mounting having a reaction surface for a curtain airbag;
Figure 6 is an internal side view of a vehicle body structure with the bracket of Figure 5 and a curtain airbag attached;
Figure 7 is a perspective view of the bracket shown in Figures 5 and 6, showing a curtain airbag located below the mounting and inboard of the reaction surface of the bracket;
Figure 8 is a first schematic section through a cant-rail, bracket and curtain airbag, taken along the line A-A in Figure 7; and
Figure 9 is a second schematic section through a cant-rail, bracket and curtain airbag, taken along the line B-B in Figure 7.

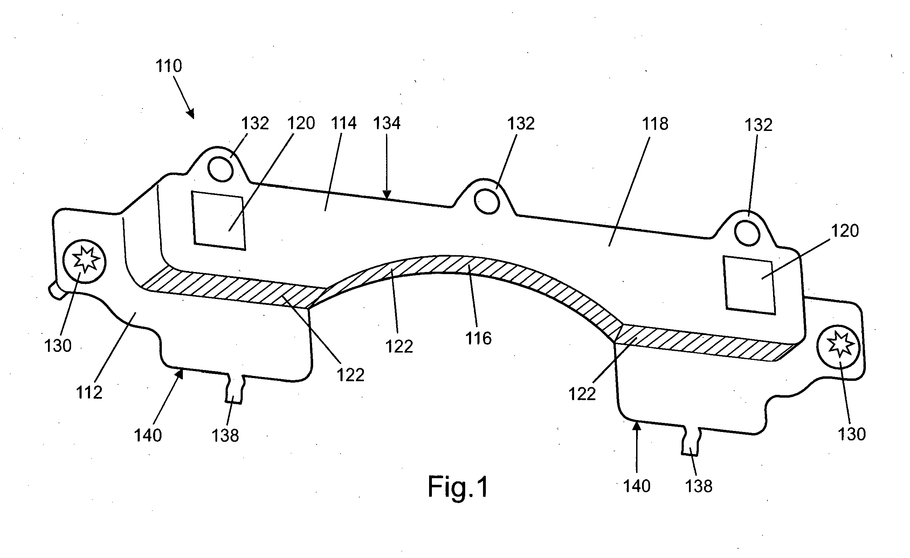

An assist grip mounting bracket 110 according to the invention is shown in Figure 1. The bracket 110 is elongate and comprises a base plate 112 and a projecting part defining a mounting 114 for an assist grip (not shown). The mounting 114 projects from the base plate 112 and the bracket 110 is hollow behind the mounting 114. The mounting 114 has an arched central portion 116. In this example, the base plate 112 is substantially flat. However, in general, the base plate 112 is shaped to interface with the corresponding supporting structure to which it is mounted. The base plate 112 is interrupted in the region below the arch 116 to minimise materials. Thus, the base plate 112 is in two portions, one at each end of the bracket 110 or one to each side of the arch 116. A main surface 118 of the mounting 114 defines two square apertures 120 which are provided for receiving correspondingly-shaped anchor portions of an assist grip (not shown) when the bracket 110 is installed in a vehicle.

The bracket 110 includes a reaction surface 122 for directing a curtain airbag (not shown in Figure 1) in a generally downward direction when the airbag is deployed. The reaction surface 122 is defined at least partially by an overhanging surface of the mounting 114 which is indicated by the cross-hatched region in Figure 1. When the bracket 110 is attached to the body structure of a vehicle, the reaction surface 122 is oriented such that it is below the mounting 114. The reaction surface 122 must provide a sufficient area for the curtain airbag to react against and must not present any surfaces that may damage a deploying airbag. The angle and position of reaction surface 122 relative to the vehicle is chosen to deflect the deploying airbag along the desired trajectory. Typically the reaction surface is positioned such that it is perpendicular to the desired deployment trajectory. The bracket 110 must provide sufficient support to the reaction surface 122 so as resist deflection when reacting against the deploying airbag. The reaction surface should therefore remain stable, i.e., stationary relative to the vehicle, during loading by the curtain airbag and maintain the reaction surface angle relative to the vehicle body. Any deflection of the reaction surface 122 would tend to affect the deployment trajectory, which is generally perpendicular to the reaction surface 122.

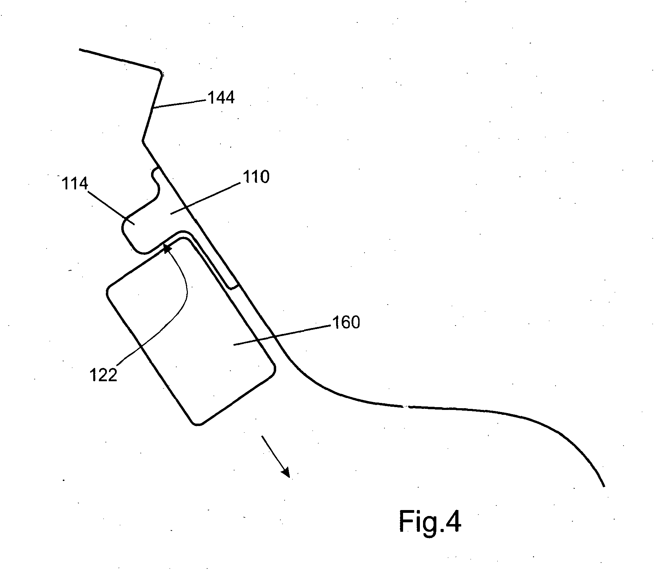

The base plate 112 is provided with a bolt hole, shown here with a bolt 130, on each side of the mounting 114 for attaching the bracket 110 to the structure of a vehicle body. Three lobes 132 extend from an upper edge 134 of the mounting 114, and each lobe 132 is also provided with an aperture. Two tangs 138 extend from a lower edge 140 of the base plate 112, one on each portion of the base plate 112. The terms 'upper' and 'lower' are used to describe the relative orientation of the various features when the bracket 110 is installed in a vehicle and are not intended to be limiting in any way. It may be seen from Figures 1 and 4 that the reaction surface 122 is generally parallel to the mounting bolts 130, such that any reaction loads put the bolts 130 into shear, which maintains the stability of the reaction surface 122 during airbag deployment.

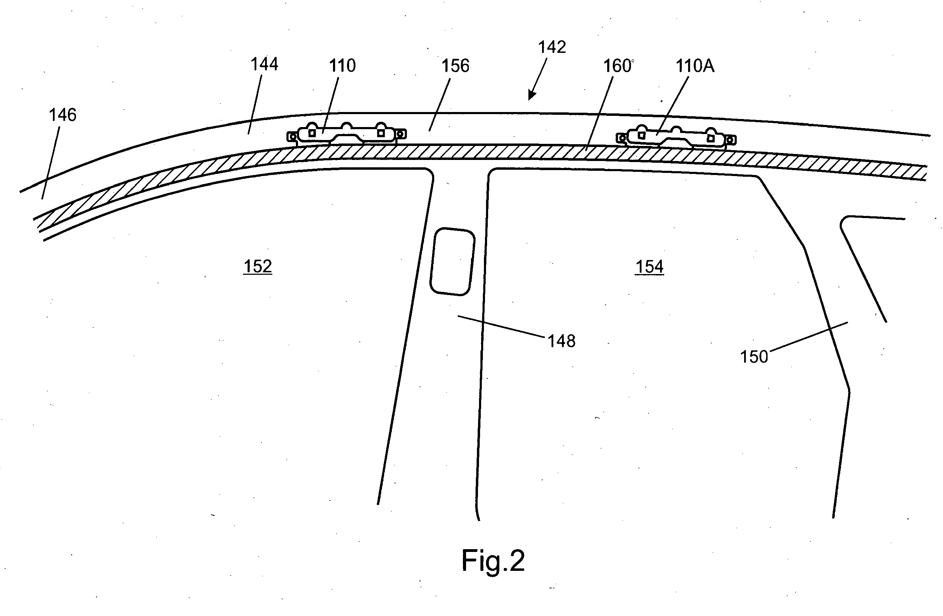

Figure 2 shows the assist grip mounting bracket 110 attached to a vehicle body structure 142. The part of the vehicle body structure 142 shown in Figure 2 comprises a cant-rail 144 with an A-pillar 146, a B-pillar 148 and a C-pillar 150 which support the cant-rail 144. The A and B pillars 146, 148 define a front side-door aperture 152, and the B and C pillars 148, 150 define a rear side-door aperture 154. A first bracket 110 is attached to an inner panel 156 of the cant-rail 144 above the front side-door aperture 152. A second bracket 110A, identical to the first bracket 110, is located above the rear side-door aperture 154.

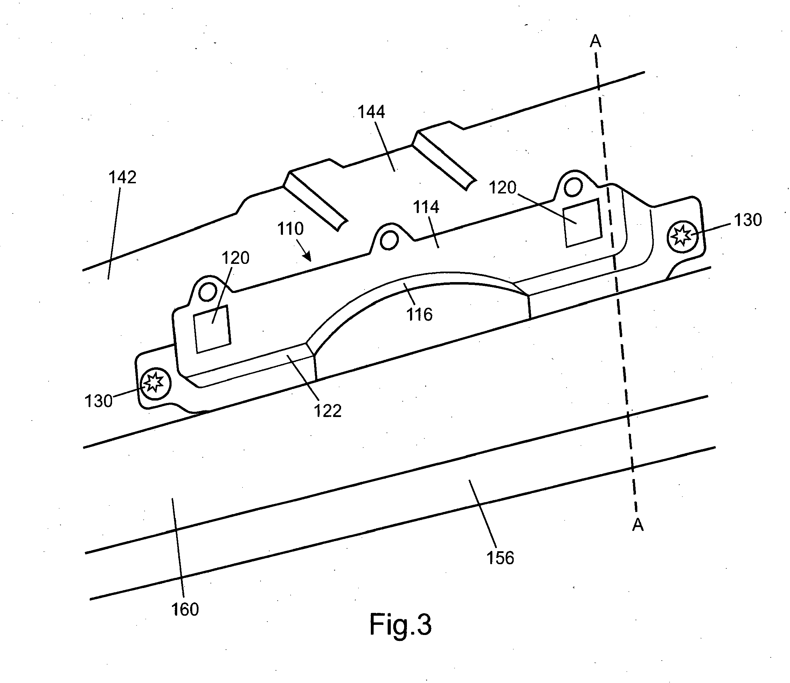

Referring now to Figures 1 to 3, attaching a bracket 110 to the cant-rail 144 involves positioning the tangs 138 in corresponding slots (not shown) in the inner panel 156 of the cant-rail 144. The tangs 138 facilitate the initial positioning of the bracket 110, and allow the bracket 110 to be installed using only one hand. The bracket 110 is then pivoted about the tangs 138 to bring the base plate 112 into contact with the inner panel 156 of the cant-rail 144. The bracket 110 is then secured to the cant-rail 144 using bolts 130 (Figure 3) which pass through the bolt holes in the base plate 112 and are received in corresponding holes (not shown) provided in the cant-rail 144. Pivoting the bracket about tangs 138 serves to tension the bracket against the cant-rail 144 once the bolts 130 are tightened. This tensioning serves to prevent potential rattles between the bracket and the cant-rail in use and enhances the rigidity of the reaction surface 122.

When the vehicle is assembled, trim such as a headlining is placed over the brackets 110, 110A, leaving the square apertures 120 exposed so that assist grips can be attached. The lobes 132 are provided for the attachment of a lighting harness (not shown).

Referring again to Figure 2, a curtain airbag 160, in its stowed state, is attached to the inner panel 156 of the cant-rail 144. The curtain airbag 160 extends along the cant-rail 144 above the front side-door aperture and rear side-door aperture 152, 154. The curtain airbag 160 is located below the mounting 114 and below the reaction surface 122, as best seen in Figure 3, which is a perspective view of one of the brackets 110 of Figure 2. The curtain airbag 160 is fastened to the inner panel 156 of the cant-rail 144 using a number of fasteners (not shown) located at intervals along the length of the curtain airbag 160. The arch 116 in the mounting 114 is provided to allow finger access to one of such fasteners.

Figure 4 is a schematic section through the cant-rail 144, bracket 110 and curtain airbag 160, taken along the line A-A in Figure 3. In use, when the curtain airbag 160 is deployed, the reaction surface 122 exerts a reaction force on the curtain airbag 160 in a generally downwards direction as indicated by the arrow in Figure 4. The reaction force exerted on the deploying airbag 160 by the reaction surface 122 is generally perpendicular to the surface contacted by the airbag 122.

When the brackets 110 are installed in a vehicle, the attached assist grips (not shown) will not interfere with deployment of the curtain airbag 160 because the curtain airbag 160 is stowed below the mountings 114 of the brackets 110, and the reaction surfaces 122 of the brackets 110 ensure a generally downwards deployment of the curtain airbag 160.

The bracket 110 may also include one or more deflection surfaces (not shown) in the form of one or more inwardly-extending ramps which extend from the lower edge 140 of the base plate 112. The curtain airbag 160 would be stowed between the reaction surface 122 and the one or more ramps. The ramps would be located above projecting items of vehicle trim, and the ramps would be inclined to deflect the curtain airbag clear of the items of vehicle trim during deployment.

In an alternative embodiment of the invention (not shown in the Figures), an assist grip mounting bracket is provided for installation below a stowed curtain airbag. This arrangement may be used in a tall vehicle such as a Sports Utility Vehicle (SUV) or a Multi-Purpose Vehicle (MPV) where it is common for an assist grip to extend below a door aperture so that it can be seen when the door is opened and used by passengers to pull themselves into the vehicle. In this embodiment a curtain airbag is stowed above the mounting of the bracket and the bracket includes a deployment control surface also located above the mounting. The deployment control surface is a deflection surface in the form of an inwardly extending ramp which extends from an upper edge of the bracket and is inclined to deflect the airbag clear of the assist grip during deployment. In this example, the vehicle body structure such as a cant-rail may provide the reaction surface for directing the airbag generally downwards, or alternatively the bracket may include an integral reaction surface located above the stowed airbag for the same purpose.

Although the embodiments described above are separate components for attaching to the vehicle body structure, the invention can also be embodied in a part of the vehicle body structure. For example, a part of the cant-rail can be shaped to provide both the mounting for an assist grip, and one or more deployment control surfaces (whether they are reaction surfaces, deflection surfaces or both) for a curtain airbag.

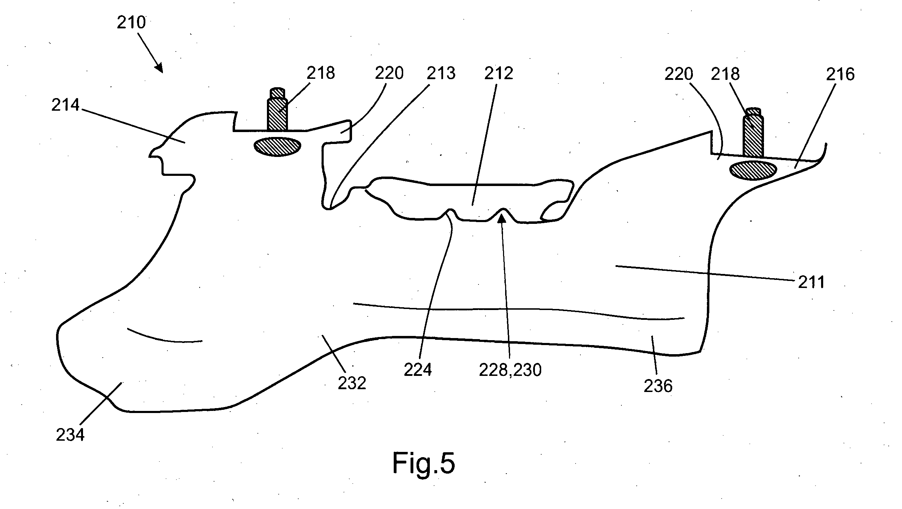

A sunroof mechanism mounting bracket 210 according to the invention is shown in Figure 5. The bracket 210 comprises a base plate 211 with a substantially central platform 212 projecting from an upper edge 213 of the base plate 211. In this example, the base plate 211 is substantially flat, however in general the base plate 211 is shaped to interface with the corresponding supporting structure to which it is mounted. First and second arms 214, 216 extend upwards from the base plate 211 respectively to each side of the platform 212. Threaded fasteners 218 are shown in Figure 5 which extend through an end portion 220 of each arm 214, 216 and are provided for securing the bracket 210 to a vehicle body structure (not shown). The bracket 210 is also secured to the vehicle body structure by further threaded fasteners (not shown) which pass through apertures (not shown) in the base plate 211.

When the bracket 210 is secured to a vehicle body structure, the platform 212 is substantially horizontal and projects inboard, and is used to support a sunroof mechanism (not shown). The platform 212 includes swages 224 to increase the rigidity of the platform 212.

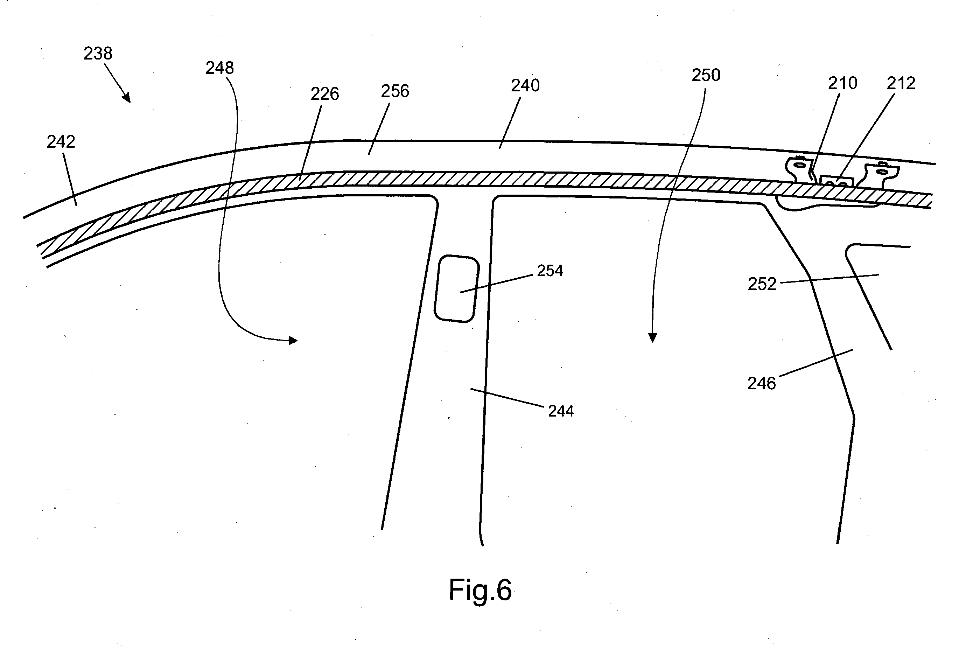

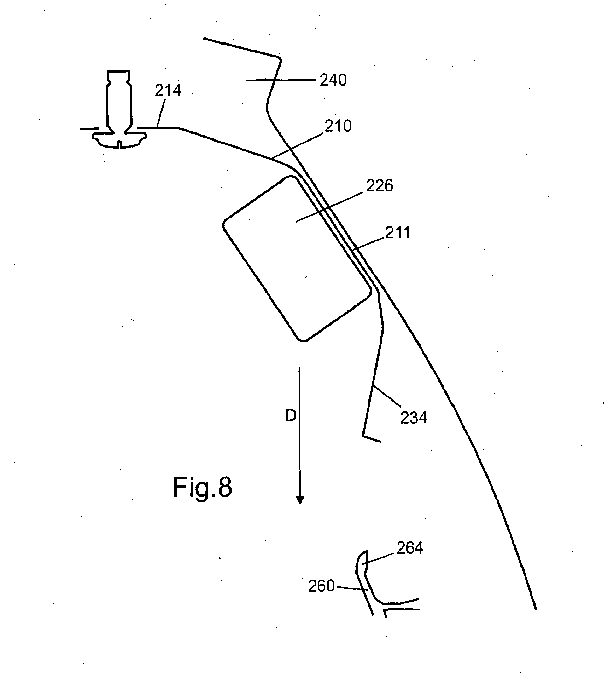

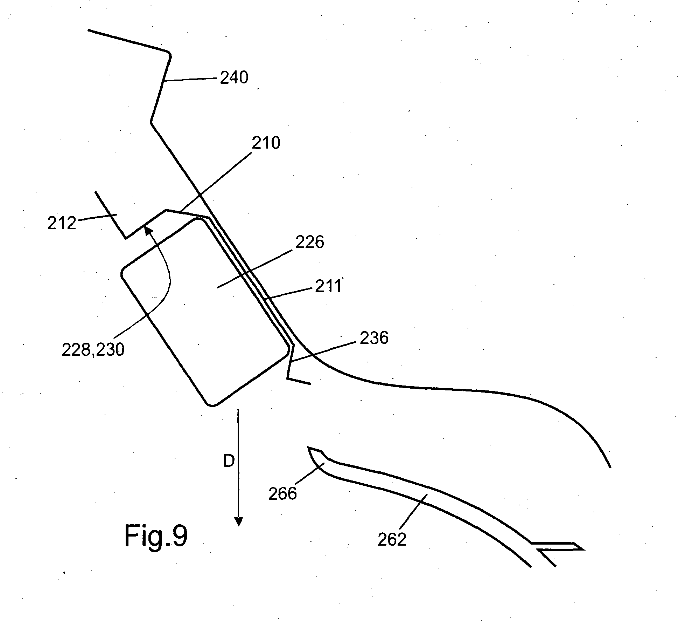

Referring to Figures 5 and 6, the bracket 210 includes a reaction surface 228 for directing the motion of a curtain airbag 226 when the airbag is deployed, as described in more detail later with reference to Figure 8 and 9. The reaction surface 228 is defined at least partially by an overhanging surface 230 of the platform 212, which can be seen more clearly in Figure 9. When the bracket 210 is attached to the body structure of a vehicle, and a sunroof mechanism is supported by the platform 212, the reaction surface 228 is below the sunroof mechanism.

Depending from a lower portion 232 of the base plate 211 is a first ramp 234 which extends generally below, and longitudinally beyond the first arm 214. Additionally a second ramp 236 depends from the base plate 211, the second ramp 236 generally extending below the platform 212 and the second arm 216. Each ramp 234, 236 extends in an inboard and downward direction when the bracket 210 is attached to a vehicle body structure. This direction is illustrated by Arrow D in Figures 8 and 9. The respective functions of the first and second ramps 234, 236 are described in more detail later with reference to Figures 8 and 9 respectively.

Figure 6 shows the sunroof mechanism mounting bracket 210 attached to a vehicle body structure 238. The part of the vehicle body structure 238 shown in Figure 6 comprises a cant-rail 240 with an A-pillar 242, a B-pillar 244 and a C-pillar 246 supporting the cant-rail 240. The A and B pillars 242, 244 define a front side-door aperture 248, and the B and C pillars 244, 246 define a rear side-door aperture 250. A rear quarter window region 252 is disposed behind the C-pillar 246. The bracket 210 is attached to the cant-rail 240 in a region generally above the C-pillar 246 such that a sunroof mechanism mounted on the bracket 210 will allow a sunroof and/or a sunblind to retract above and behind the heads of rear seat occupants

Two similar brackets 210 (one a mirror image of the other) would typically be installed opposite one another on respective cant-rails of the vehicle, one to each side of a vehicle roof to support a sunroof mechanism. The platforms 212 of each bracket 210 cooperate to support the sunroof mechanism as a cross member.

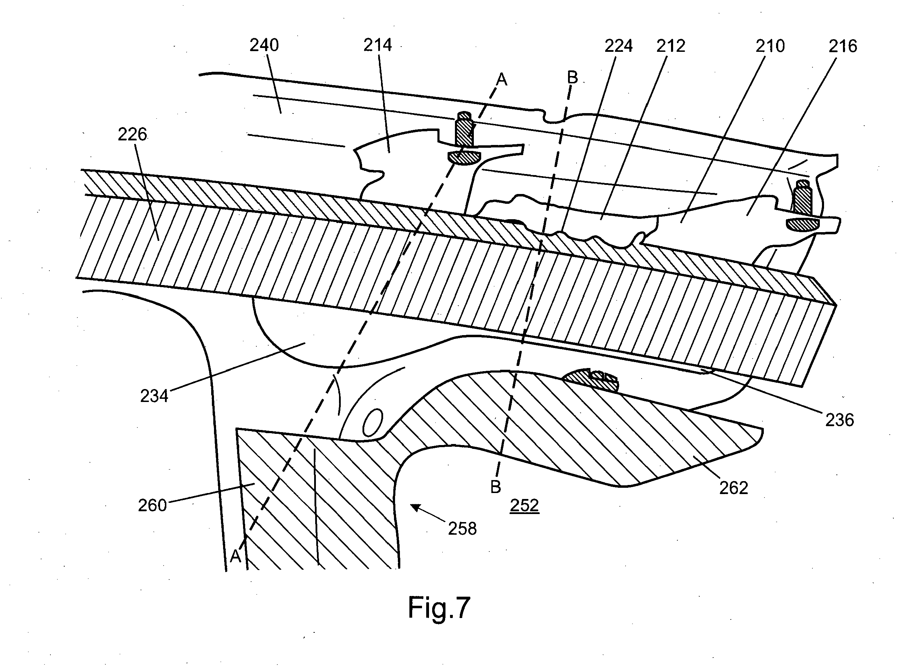

A curtain airbag 226, in its stowed state, is attached to an inner panel 256 of the cant-rail 240. The curtain airbag 226 extends along the cant-rail 240 above the front side-door aperture, rear side-door aperture and rear quarter window regions 248, 250, 252. The curtain airbag 226 is located below the platform 212 as best seen in Figure 7. The curtain airbag 226 is therefore also located below reaction surface 228 as shown in Figure 5.

A piece of interior trim 258 surrounds the rear quarter window region 252 as shown in Figure 7. This piece of interior trim 258 has a first, upright portion 260 forward of the rear quarter window region 252 and extending along the C-pillar 246, and a second, generally horizontal portion 262 located along the top of said region 252. The bracket 210 is attached to the cant-rail 240 above the rear quarter window region 252, such that the first ramp 234 is located directly above the first portion of trim 260, and the second ramp 236 is located directly above the second portion of trim 262. The second portion 262 projects inboard to a greater extend than the first portion 260. The function of the ramps 234, 236 will now be described in more detail with reference to Figures 8 and 9.

Figure 8 is a schematic section through the cant-rail 240, bracket 210 and curtain airbag 226, taken along the line A-A in Figure 7. The section in Figure 8 is taken through the first arm 214 and the first ramp 234 of the bracket 210, and features an upper edge 264 of the first portion of interior trim 260 shown in Figure 7. The first ramp 234 is oriented such that an extension of the first ramp 234 would clear the first portion of trim 260.

Figure 9 is a schematic section through the cant-rail 240, bracket 210 and curtain airbag 226, taken along the line B-B in Figure 7. The section in Figure 9 is taken through the platform 212 and second ramp 236, and features an upper edge 266 of the second portion of interior trim 262 shown in Figure 7. The second ramp 236 is oriented such that an extension of the second ramp 236 would clear the second portion of trim 262.

In use, when the curtain airbag 226 is deployed, the reaction surface 228 of the bracket 210 exerts a reaction force on the curtain airbag 226 which causes it to be deployed in a generally downward direction. The ramps 234, 236 ensure that the airbag 226 is deflected clear of the various items of vehicle trim 260, 262. Additionally, because the curtain airbag 226 is stowed below the sunroof and sunroof mounting, and the reaction surface 228 ensures a downward deployment of the curtain airbag 226, the sunroof and sunroof mounting will not interfere with deployment of the curtain airbag 226.

Although the embodiment described is a separate component for attaching to the vehicle body structure, the invention can also be embodied in a part of the vehicle body structure. For example, a part of the cant-rail inner panel can be shaped to provide both the mounting for a sunroof, and one or more deployment control surfaces for a curtain airbag.

## Claims

1. A vehicle component mounting bracket (210) for a vehicle comprising a curtain airbag (226), said bracket including means (218) for attachment to a vehicle body structure, wherein said bracket (210) comprises a deployment control surface (228) angled and positioned to deflect the deployment of the curtain airbag (226) away from a vehicle component mounting (212) when said curtain airbag is deployed; **characterized in that**:
the bracket comprises a sunroof mechanism mounting bracket.

2. A bracket (210) according to claim 1, wherein said bracket comprises a platform (212) for supporting the sunroof mechanism.

3. A bracket (210) according to claim 2, wherein said deployment control surface (228) is defined at least partially by a surface (230) of said platform (212).

4. A bracket (210) according to any preceding claim, wherein said bracket is adapted to deform in a controlled fashion when it is struck by a vehicle occupant during a vehicle collision.

5. A bracket (210) according to any preceding claim, wherein said deployment control surface (228) comprises a reaction surface.

6. A bracket (210) according to any preceding claim, further comprising a deflection surface (234) arranged to deflect the curtain airbag (226) during deployment, said deflection surface (234) serving as an additional deployment control surface.

7. A bracket (210) according to claim 6, wherein said deflection surface (234) is a ramp.

8. A bracket (210) according to any preceding claim, wherein the vehicle component mounting (212) is arranged in use in a vehicle above the curtain airbag (226).

9. A bracket (210) according to any preceding claim, wherein the vehicle component mounting (212) is defined by a projecting part of the bracket (210).

10. A bracket (210) according to any one of claims 6 to 9, wherein the deflection surface (234) is defined by a first ramp which extends inboard from the bracket (210) when said bracket is installed in a vehicle.

11. A bracket (210) according to claim 10, further comprising a second ramp (236) which extends inboard from the bracket (210) when installed in a vehicle, said second ramp (236) serving as an additional deflection surface, wherein the first (234) and second (236) ramps extend from the bracket (210) to different extents.

12. A bracket (210) according to any preceding claim, wherein the bracket comprises a bracket adapted to be fastened to a cant-rail (144).

13. A bracket (210) according to any one of claims 1 to 11, wherein the bracket comprises a bracket adapted to be welded to a cant-rail (144).

14. A vehicle cant-rail (144) incorporating a bracket (210) according to any preceding claim.

15. A vehicle sunroof mechanism mounting comprising a pair of brackets (210) according to any one of claims 1 to 13.

## Patentansprüche

1. Montagebügel (210) für ein Fahrzeugbauteil für ein Fahrzeug mit einem Vorhangairbag (226), wobei der Bügel Mittel (218) zum Befestigen an einer Fahrzeugkarosserieanordnung einschließt, wobei der Bügel (210) eine Entfaltungssteuerungsoberfläche (228) aufweist, die winkelig angebracht und so positioniert ist, dass das Entfalten des Vorhangairbags (226) von einer Fahrzeugbauteilhalterung (212) weggelenkt wird, wenn sich der Vorhangairbag entfaltet; **dadurch gekennzeichnet, dass**:
der Bügel einen Montagebügel für einen Sonnendachmechanismus umfasst.

2. Bügel (210) nach Anspruch 1, wobei der Bügel eine Platte (212) zum Stützen des Sonnendachmechanismus aufweist.

3. Bügel (210) nach Anspruch 2, wobei die Entfaltungssteuerungsoberfläche (228) wenigstens zum Teil durch eine Oberfläche (230) der Platte (212) definiert wird.

4. Bügel (210) nach einem der vorhergehenden Ansprüche, wobei der Bügel angepasst ist, sich kontrolliert zu verformen, wenn ein Fahrzeuginsasse während eines Fahrzeugaufpralls gegen ihn stößt.

5. Bügel (210) nach einem der vorhergehenden Ansprüche, wobei die Entfaltungssteuerungsoberfläche (228) eine Reaktionsoberfläche umfasst.

6. Bügel (210) nach einem der vorhergehenden Ansprüche, ferner umfassend eine Deflektionsoberfläche (234), die so angepasst ist, dass sie den Vorhangairbag (226) beim Entfalten ablenkt, wobei die Deflektionsoberfläche (234) als eine zusätzliche Entfaltungssteuerungsoberfläche dient.

7. Bügel (210) nach Anspruch 6, wobei die Deflektionsoberfläche (234) eine Rampe ist.

8. Bügel (210) nach einem der vorhergehenden Ansprüche, wobei die Fahrzeugbauteilhalterung (212) beim Gebrauch in einem Fahrzeug über dem Vorhangairbag (226) angeordnet ist.

9. Bügel (210) nach einem der vorhergehenden Ansprüche, wobei die Fahrzeugbauteilhalterung (212) durch einen vorstehenden Teil des Bügels (210) definiert ist.

10. Bügel (210) nach einem der Ansprüche 6 bis 9, wobei die Deflektionsoberfläche (234) durch eine erste Rampe definiert ist, die sich vom Bügel (210) aus nach innen erstreckt, wenn der Bügel in ein Fahrzeug eingebaut ist.

11. Bügel (210) nach Anspruch 10, ferner umfassend eine zweite Rampe (236), die sich vom Bügel (210) aus, wenn in ein Fahrzeug eingebaut, nach innen erstreckt, wobei die zweite Rampe (236) als zusätzliche Deflektionsoberfläche dient, wobei sich die erste (234) und die zweite Rampe (236) vom Bügel (210) aus in unterschiedliche Richtungen erstrecken.

12. Bügel (210) nach einem der vorhergehenden Ansprüche, wobei der Bügel einen Bügel umfasst, der zum Befestigen an einen Dachrahmen (144) angepasst ist.

13. Bügel (210) nach einem der Ansprüche 1 bis 11, wobei der Bügel einen Bügel umfasst, der angepasst ist, um an einen Dachrahmen (144) geschweißt zu werden.

14. Dachrahmen (144) eines Fahrzeugs, der einen Bügel (210) nach einem der vorhergehenden Ansprüche umfasst.

15. Halterung für einen Sonnendachmechanismus für ein Fahrzeug, umfassend ein Paar Bügel (210) nach einem der Ansprüche 1 bis 13.

## Revendications

1. Console de montage de composant de véhicule (210) pour un véhicule comprenant un rideau gonflable (226), ladite console incluant un moyen (218) de fixation à une structure de corps de véhicule, dans laquelle ladite console (210) comprend une surface de commande de déploiement (228) orientée et positionnée pour dévier le déploiement du rideau gonflable (226) en éloignement d'un montage de composant de véhicule (212) lorsque ledit rideau gonflable est déployé ; **caractérisée en ce que** :
la console comprend une console de montage de mécanisme de toit ouvrant.

2. Console (210) selon la revendication 1, dans laquelle ladite console comprend une plateforme (212) destinée à supporter le mécanisme de toit ouvrant.

3. Console (210) selon la revendication 2, dans laquelle ladite surface de commande de déploiement (228) est définie au moins partiellement par une surface (230) de ladite plateforme (212).

4. Console (210) selon l'une quelconque des revendications précédentes, dans laquelle ladite console est adaptée pour se déformer de façon commandée lorsqu'elle est frappée par un occupant du véhicule pendant une collision du véhicule.

5. Console (210) selon l'une quelconque des revendications précédentes, dans laquelle ladite surface de commande de déploiement (228) comprend une surface de réaction.

6. Console (210) selon l'une quelconque des revendications précédentes, comprenant en outre une surface de déviation (234) agencée pour dévier le rideau gonflable (226) pendant le déploiement, ladite surface de déviation (234) servant de surface de commande de déploiement supplémentaire.

7. Console (210) selon la revendication 6, dans laquelle ladite surface de déviation (234) est une rampe.

8. Console (210) selon l'une quelconque des revendications précédentes, dans laquelle le montage de composant de véhicule (212) est agencé en utilisation dans un véhicule au-dessus du rideau gonflable (226).

9. Console (210) selon l'une quelconque des revendications précédentes, dans laquelle le montage de composant de véhicule (212) est défini par une partie en saillie de la console (210).

10. Console (210) selon l'une quelconque des revendications 6 à 9, dans laquelle la surface de déviation (234) est définie par une première rampe qui s'étend vers l'intérieur par rapport à la console (210) lorsque ladite console est installée dans un véhicule.

11. Console (210) selon la revendication 10, comprenant en outre une seconde rampe (236) qui s'étend vers l'intérieur par rapport à la console (210) lorsqu'elle est installée dans un véhicule, ladite seconde rampe (236) servant de surface de déviation supplémentaire, lorsque les première (234) et seconde (236) rampes s'étendent à partir de la console (210) à différents niveaux.

12. Console (210) selon l'une quelconque des revendications précédentes, dans laquelle la console comprend une console adaptée pour être fixée sur un brancard (144).

13. Console (210) selon l'une quelconque des revendications 1 à 11, dans laquelle la console comprend une console adaptée pour être soudée à un brancard (144).

14. Brancard (144) de véhicule incorporant une console (210) selon l'une quelconque des revendications précédentes.

15. Montage de mécanisme de toit ouvrant de véhicule comprenant une paire de consoles (210) selon l'une quelconque des revendications 1 à 13.
